# EUROPEAN PATENT APPLICATION

(11) **EP 4 535 845 A1**
(43) Date of publication of application: **09.04.2025**
(21) Application number: 22943248.9
(22) Date of filing: 27.05.2022
(51) Int. Cl.: H04W 12/06, H04W 8/20

(54) **METHOD AND APPARATUS FOR SELECTING AUTHENTICATION MECHANISM FOR PERSONAL INTERNET-OF-THINGS DEVICE, UE, NETWORK FUNCTION, AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2022/095773
(87) International publication number: WO 2023/226051

(57) **Abstract**

The present disclosure relates to a method and apparatus for selecting an authentication mechanism for a personal Internet-of-things device, a UE, a network function, and a storage medium. The method comprises : receiving at least one of the following information sent by a personal Internet-of-things network (PIN) element : an authentication method name supported by the PIN element, a PIN element identifier, and a PIN element authentication indicator; sending a first message to a first network function to indicate a PIN element authentication process to the first network function, wherein the first message carries at least one of the following information : the PIN element authentication indicator, the authentication method name supported by the PIN element, a subscription concealed identifier (SUCI) or 5G globally unique temporary identifier (5G-GUTI) of a PIN element gateway, and the PIN element identifier. The present disclosure implements the identity authentication of a 5G core network on the PIN element, and improves the communication security of a PIN.

## Description

### TECHNICAL FIELD

The present disclosure relates to an identity authentication technology in a personal IoT network (PIN), and more particularly to a method and apparatus for selecting an authentication mechanism for a personal IoT device, a user equipment (UE), a network function, and a storage medium.

### BACKGROUND

The Personal IoT Network (PIN) consists of PIN elements that communicate using PIN direct connection or direct network connection, and are locally managed using a PIN element (PINE) with management capability. Example of the PIN includes wearable device networks and smart home and smart office devices. Through a PIN element with gateway capability, the PIN element can access 5G network services and can communicate with a PIN element that is not in range to use PIN direct connection. The PIN includes at least one PIN element with gateway capability (PEGC) and at least one PIN element with management capability (PEMC). PEGC and PEMC can also be UEs that directly access 5GS. PEMC is able to access 5GS through PEGC.

Currently, there is no technical solution for starting identity authentication for a PIN element for reference.

### SUMMARY

In view of this, the embodiments of the present disclosure provide a method and apparatus for selecting an authentication mechanism for a personal Internet of Things device, a UE, a network function, and a storage medium.

According to a first aspect of the present disclosure, there is provided a method for selecting an authentication mechanism for a personal Internet of Things device, applied to a user equipment UE, the method including:
receiving at least one of the following information sent by a personal Internet of Things network PIN element: a name of an authentication method supported by the PIN element, a PIN element identifier, and a PIN element authentication indicator.

In some embodiments, the method further includes:
sending a first message to a first network function and indicating a PIN element authentication process to the first network function; where the first message carries at least one of the following information:
the PIN element authentication indicator, the name of the authentication method supported by the PIN element, a subscription concealed identifier SUCI or a 5G global unique temporary identifier 5G-GUTI of a PIN element gateway (PIN element with gateway capability), and the PIN element identifier.

In some embodiments, sending the first message to the first network function includes:
sending the first message to the first network function in response to receiving a second message of the PIN element.

In some embodiments, sending the first message to the first network function includes:
encapsulating the first message into a non-access stratum NAS message and sending the NAS message to the first network function.

In some embodiments, the UE is enabled as a PIN element gateway.

According to a second aspect of the present disclosure, there is provided a method for selecting an authentication mechanism for a personal Internet of Things device, applied to a second network function, the method including:
authorizing an authentication request for a PIN element gateway and selecting an authentication method for PIN element authentication.

In some embodiments, the authentication request carries at least one of the following information:
a PIN element authentication indicator, a PIN element identifier, identification information of the PIN element gateway, a name of an authentication method supported by a PIN element, and a serving network identifier (e.g., a name of a serving network (SN)).

In some embodiments, the PIN element identifier is protected information or unprotected information, where a protection method of the PIN element identifier includes at least one of the following: encryption, or anonymization;
authorizing the authentication request for the PIN element gateway includes:
in a case that the PIN element identifier is protected information, authorizing the authentication request for the PIN element gateway after deprotecting the PIN element identifier.

In some embodiments, authorizing the authentication request for the PIN element gateway includes:
determining that the PIN element gateway is a legitimate gateway and is a gateway of the PIN element according to the PIN element identifier, the subscription information of the PIN element gateway and a subscription concealed identifier SUCI and/or a subscription permanent identifier SUPI of the PIN element gateway.

In some embodiments, authorizing the authentication request for the PIN element gateway includes:
if the identification information of the PIN element gateway is the SUCI, converting the SUCI into the SUPI, and then authorizing the authentication request for the PIN element gateway.

In some embodiments, the method further includes:
selecting the authentication method supported by the PIN element for the PIN element.

In some embodiments, selecting the authentication method supported by the PIN element for the PIN element includes:
selecting the authentication method for the PIN element based on the PIN element identifier and the name of the authentication method supported by the PIN element, where the PIN element identifier and the name of the authentication method supported by the PIN element are sent by the PIN element.

In some embodiments, the method further includes:
the second network function is capable of identifying the PIN element authentication indicator.

According to a third aspect of the present disclosure, there is provided a method for selecting an authentication mechanism for a personal Internet of Things device, applied to a first network function, the method including:
receiving a third message sent by a PIN element gateway,
where the third message carries at least one of the following information:
   a PIN element authentication indicator, a name of an authentication method supported by a PIN element, a subscription concealed identifier SUCI of the PIN element gateway, a 5G global unique temporary identifier 5G-GUTI, and a PIN element identifier.

In some embodiments, the method further includes:
sending a fourth message to a third network function and indicating a PIN element authentication process;
where the fourth message carries at least one of the following information:
   the PIN element authentication indicator, the PIN element identifier, identification information of the PIN element gateway, the name of the authentication method supported by the PIN element, and a serving network identifier.

In some embodiments, the method further includes:
the first network function is capable of identifying the PIN element authentication indicator.

According to a fourth aspect of the present disclosure, there is provided a method for selecting an authentication mechanism for a personal Internet of Things device, applied to a third network function, the method including:
receiving a fifth message sent by a first network function;
where the fifth message carries at least one of the following information:
   a PIN element authentication indicator, a PIN element identifier, identification information of a PIN element gateway, an authentication method, and a serving network identifier.

In some embodiments, the method further includes:
sending a sixth message to a fourth network function;
where the sixth message carries at least one of the following information:
   the PIN element authentication indicator, the PIN element identifier, the identification information of the PIN element gateway, a name of an authentication method supported by a PIN element, and the serving network identifier.

In some embodiments, the method further includes:
the third network function is capable of identifying the PIN element authentication indicator.

According to a fifth aspect of the present disclosure, there is provided a method for selecting an authentication mechanism for a personal Internet of Things device, applied to a fourth network function, the method including:
receiving a seventh message sent by a third network function;
where the seventh message carries at least one of the following information:
   a PIN element authentication indicator, a PIN element identifier, identification information of a PIN element gateway, a name of an authentication method supported by a PIN element, and a serving network identifier.

In some embodiments, the method further includes:
sending an eighth message to a second network function;
where the eighth message carries at least one of the following information:
   the PIN element authentication indicator, the PIN element identifier, the identification information of the PIN element gateway, the name of the authentication method supported by the PIN element, and the serving network identifier.

In some embodiments, the method further includes:
the fourth network function is capable of identifying the PIN element authentication indicator.

According to a sixth aspect of the present disclosure, there is provided a device for selecting an authentication mechanism for a personal Internet of Things device, including:
a receiving unit configured to receive at least one of the following information sent by a personal Internet of Things network PIN element: a name of an authentication method supported by a PIN element, a PIN element identifier, and a PIN element authentication indicator.

In some embodiments, the device further includes:
a sending unit configured to send a first message to a first network function and indicating a PIN element authentication process to the first network function;
where the first message carries at least one of the following information:
   the PIN element authentication indicator, the name of the authentication method supported by the PIN element, a subscription concealed identifier SUCI or a 5G global unique temporary identifier 5G-GUTI of a PIN element gateway, and the PIN element identifier.

According to a seventh aspect of the present disclosure, there is provided a device for selecting an authentication mechanism for a personal Internet of Things device, including:
an authorization unit configured to authorize an authentication request for a PIN element gateway; where the PIN element gateway allows to perform an authorization process for a PIN element based on identification information of a PIN element gateway and a PIN element identifier.

In some embodiments, the device further includes:
a selection unit configured to select the authentication method supported by the PIN element for the PIN element.

In some embodiments, the selection unit is further configured to:
select the authentication method for the PIN element based on the PIN element identifier and the name of the authentication method supported by the PIN element, where the PIN element identifier and the name of the authentication method supported by the PIN element are sent by the PIN element.

According to an eighth aspect of the present disclosure, there is provided a device for selecting an authentication mechanism for a personal Internet of Things device, including:
a receiving unit configured to receive a third message sent by a PIN element gateway;
where the third message carries at least one of the following information:
   a PIN element authentication indicator, a name of an authentication method supported by a PIN element, a subscription concealed identifier SUCI of a PIN element gateway, a 5G global unique temporary identifier 5G-GUTI, and a PIN element identifier.

In some embodiments, the device further includes:
a sending unit configured to send a fourth message to a third network function and indicating a PIN element authentication process;
where the fourth message carries at least one of the following information:
   the PIN element authentication indicator, the PIN element identifier, identification information of the PIN element gateway, the name of the authentication method supported by the PIN element, and a serving network identifier.

According to a ninth aspect of the present disclosure, there is provided a device for selecting an authentication mechanism for a personal Internet of Things device, including:
a receiving unit configured to receive a fifth message sent by a first network function;
where the fifth message carries at least one of the following information:
   a PIN element authentication indicator, a PIN element identifier, identification information of a PIN element gateway, a name of an authentication method supported by a PIN element, and a serving network identifier.

In some embodiments, the device further includes:
a sending unit configured to send a sixth message to a fourth network function;
where the sixth message carries at least one of the following information:
   the PIN element authentication indicator, the PIN element identifier, the identification information of the PIN element gateway, a name of an authentication method supported by a PIN element, and the serving network identifier.

According to a tenth aspect of the present disclosure, there is provided a device for selecting an authentication mechanism for a personal Internet of Things device, including:
a receiving unit configured to receive a seventh message sent by a third network function;
where the seventh message carries at least one of the following information:
   a PIN element authentication indicator, a PIN element identifier, identification information of a PIN element gateway, a name of an authentication method supported by a PIN element, and a serving network identifier.

In some embodiments, the device further includes:
a sending unit configured to send an eighth message to a second network function;
where the eighth message carries at least one of the following information:
   the PIN element authentication indicator, the PIN element identifier, the identification information of the PIN element gateway, the name of the authentication method supported by the PIN element, and the serving network identifier.

According to an eleventh aspect of the present disclosure, there is provided a user equipment including a processor, a transceiver, a memory, and an executable program stored on the memory and capable of being run by the processor, wherein the processor executes the steps of the method for selecting an authentication mechanism for a personal Internet of Things device according to the first aspect when the processor runs the executable program.

According to a twelfth aspect of the present disclosure, there is provided a network function including a processor, a transceiver, a memory, and an executable program stored on the memory and capable of being run by the processor, wherein the processor executes the steps of the method for selecting an authentication mechanism for a personal Internet of Things device according to the second aspect when the processor runs the executable program.

According to a thirteenth aspect of the present disclosure, there is provided a network function including a processor, a transceiver, a memory, and an executable program stored on the memory and capable of being run by the processor, wherein the processor executes the steps of the method for selecting an authentication mechanism for a personal Internet of Things device according to the third aspect when the processor runs the executable program.

According to a fourteenth aspect of the present disclosure, there is provided a network function including a processor, a transceiver, a memory, and an executable program stored on the memory and capable of being run by the processor, wherein the processor executes the steps of the method for selecting an authentication mechanism for a personal Internet of Things device according to the fourth aspect when the processor runs the executable program.

According to a fifteenth aspect of the present disclosure, there is provided a network function including a processor, a transceiver, a memory, and an executable program stored on the memory and capable of being run by the processor, wherein the processor executes the steps of the method for selecting an authentication mechanism for a personal Internet of Things device according to the fifth aspect when the processor runs the executable program.

According to sixteenth storage medium having an executable program stored thereon, wherein when the executable program is executed by a processor, the steps of the method for selecting an authentication mechanism for a personal Internet of Things device are implemented.

In the technical solution of the embodiments of the present disclosure, when the PIN element accesses the PIN through the gateway, the network needs to authenticate the PIN element, establish a secure non-3GPP link between the PIN element and the PEGC, negotiate the corresponding identity authentication method and initiate authentication. The embodiments of the present disclosure implement the identity authentication of the PIN element by the 5G core network, improving the communication security of the PIN.

### BRIEF DESCRIPTION OF THE DRAWINGS

The accompanying drawings herein are incorporated into the specification and constitute a part of the specification, showing embodiments consistent with the present disclosure, and used together with the specification to explain the principles of the embodiments of the present disclosure.
FIG. 1 is a schematic diagram of the structure of a wireless communication system according to an embodiment;
FIG. 2 is a flow chart of a method for selecting an authentication mechanism for a personal Internet of Things device according to an embodiment;
FIG. 3 is a flow chart of a method for selecting an authentication mechanism for a personal Internet of Things device according to an embodiment;
FIG. 4 is a flow chart of a method for selecting an authentication mechanism for a personal Internet of Things device according to an embodiment;
FIG. 5 is a flow chart of a method for selecting an authentication mechanism for a personal Internet of Things device according to an embodiment;
FIG. 6 is a flow chart of a method for selecting an authentication mechanism for a personal Internet of Things device according to an embodiment;
FIG. 7 is a flow chart of a method for selecting an authentication mechanism for a personal Internet of Things device according to an embodiment.
FIG. 8 is a schematic diagram of the composition structure of a device for selecting an authentication mechanism for a personal Internet of Things device according to an embodiment;
FIG. 9 is a schematic diagram of the composition structure of a device for selecting an authentication mechanism for a personal Internet of Things device according to an embodiment;
FIG. 10 is a schematic diagram of the composition structure of a device for selecting an authentication mechanism for a personal Internet of Things device according to an embodiment;
FIG. 11 is a schematic diagram of the composition structure of a device for selecting an authentication mechanism for a personal Internet of Things device according to an embodiment;
FIG. 12 is a schematic diagram of the composition structure of a device for selecting an authentication mechanism for a personal Internet of Things device according to an embodiment;
FIG. 13 is a schematic diagram of the composition structure of a user equipment according to an embodiment.

### DETAILED DESCRIPTION

Here, embodiments will be described in detail, examples of which are shown in the accompanying drawings. When the following description refers to the drawings, unless otherwise indicated, the same numbers in different drawings represent the same or similar elements. The implementations described in the following embodiments do not represent all embodiments consistent with the embodiments of the present disclosure. Instead, they are only examples of devices and methods consistent with some aspects of the embodiments of the present disclosure as detailed in the attached claims.

The terms used in the embodiments of the present disclosure are only for the purpose of describing specific embodiments and are not intended to limit the embodiments of the present disclosure. The singular forms "one", "said" and "the" used in the embodiments of the present disclosure and the attached claims are also intended to include the plural forms unless the context clearly indicates other meanings. It should also be understood that the term "and/or" used herein refers to and includes any or all possible combinations of one or more associated listed items.

It should be understood that although the terms first, second, third, etc. may be used in the embodiments of the present disclosure to describe various information, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein can be interpreted as "upon..." or "when..." or "in response to determining".

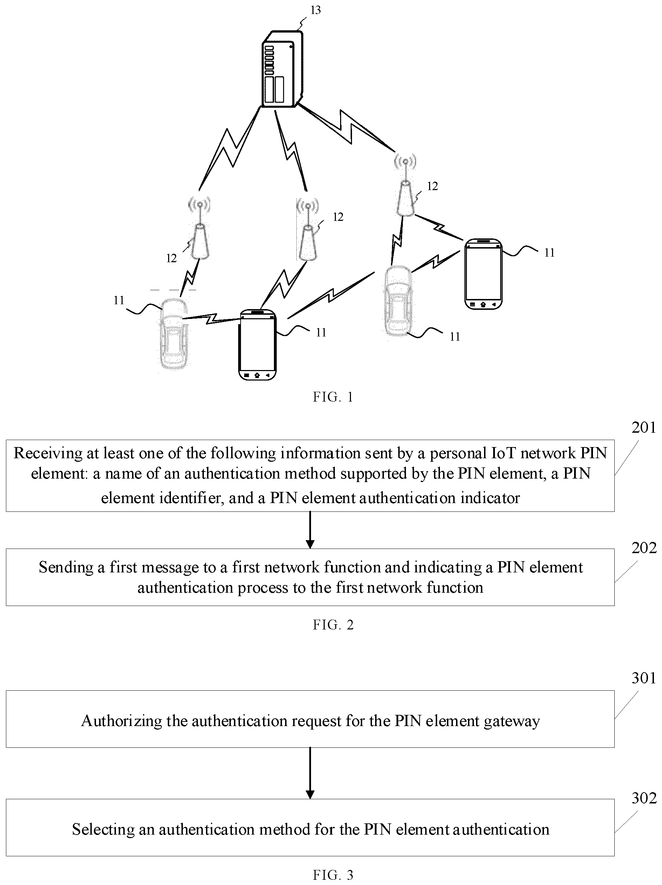

Please refer to FIG. 1, which shows a schematic diagram of a structure of a wireless communication system provided by an embodiment of the present disclosure. As shown in FIG. 1, the wireless communication system is a communication system based on cellular mobile communication technology, and the wireless communication system may include a number of terminals 11 and a number of base stations 12.

The terminal 11 can be a device that provides voice and/or data connectivity to a user. The terminal 11 can communicate with one or more core networks via a radio access network (RAN). The terminal 11 can be an Internet of Things terminal, such as a sensor device, a mobile phone (or a "cellular" phone), and a computer with an Internet of Things terminal. For example, it may be a fixed, portable, pocket-sized, handheld, computer-built-in or vehicle-mounted device, such as station (STA), subscriber unit, subscriber station, mobile station, mobile, remote station, access point, remote terminal, access terminal, user terminal, user agent, user device, or user equipment (UE). Alternatively, the terminal 11 may also be a device of an unmanned aerial vehicle. Alternatively, the terminal 11 may also be a device of an unmanned aerial vehicle. Alternatively, the terminal 11 may also be a vehicle-mounted device, for example, a trip computer with a wireless communication function, or a wireless communication device connected externally to the trip computer. Alternatively, the terminal 11 may also be a roadside device, for example, a street lamp, a signal lamp or other roadside device with a wireless communication function.

The base station 12 may be a network-side device in a wireless communication system. The wireless communication system may be a 4th generation mobile communication technology (4G) system, also known as a long-term evolution (LTE) system, or, the wireless communication system may be a 5G system, also known as a new radio (NR) system or a 5G NR system. Alternatively, the wireless communication system may be any generation system. The access network in the 5G system may be called a new generation radio access network (NG-RAN). Alternatively, the wireless communication system may be an MTC system.

The base station 12 may be an evolved base station (eNB) used in a 4G system. Alternatively, the base station 12 may also be a base station (gNB) using a centralized distributed architecture in a 5G system. When the base station 12 uses a centralized distributed architecture, it generally includes a central unit (CU) and at least two distributed units (DU). The central unit is provided with a protocol stack of a packet data convergence protocol (PDCP) layer, a radio link layer control protocol (RLC) layer, and a media access control (MAC) layer; the distributed unit is provided with a physical (PHY) layer protocol stack. The specific implementation method of the base station 12 is not limited in the embodiment of the present disclosure.

A wireless connection can be established between the base station 12 and the terminal 11 through a wireless air interface. In different implementations, the wireless air interface is a wireless air interface based on the fourth generation mobile communication network technology (4G) standard, or, the wireless air interface is a wireless air interface based on the fifth generation mobile communication network technology (5G) standard, for example, the wireless air interface is a new radio; or, the wireless air interface can also be a wireless air interface based on the next generation mobile communication network technology standard of 5G.

In some embodiments, an end-to-end (E2E) connection can also be established between the terminals 11, for example, in a scenario of V2V (vehicle to vehicle) communication in vehicle to everything (V2X), vehicle to infrastructure (V2I) communication and vehicle to pedestrian (V2P) communication, etc.

In some embodiments, the wireless communication system may further include a network management device 13.

The execution subject involved in the embodiment of the present disclosure includes but is not limited to a terminal (UE, User Equipment) in a cellular mobile communication system, and a base station of a cellular mobile communication, etc.

FIG. 2 is a flow chart of a method for selecting an authentication mechanism for a personal Internet of Things device according to an embodiment. As shown in FIG. 2, the method for selecting an authentication mechanism for a personal Internet of Things device in the embodiment of the present disclosure is applied to a UE, and the method for selecting an authentication mechanism for a personal Internet of Things device includes the following processing steps:
Step 201, receiving at least one of the following information sent by a personal IoT network PIN element: a name of an authentication method supported by the PIN element, a PIN element identifier, and a PIN element authentication indicator.

In the embodiment of the present disclosure, the UE can be enabled as an access gateway for the PIN element, that is, the UE can be enabled as a private Internet of Things gateway such as PEGC. The PIN element can be accessed to the 5G mobile network through the UE.

The UE as a PEGC can negotiate with the PIN element on how to establish a secure non-3GPP link, and negotiate the corresponding PIN element identity authentication method, etc.

Step 202, sending a first message to a first network function and indicating a PIN element authentication process to the first network function.

When the UE receives a second message sent by the PIN element, the first message is sent to the first network function. Here, the second message can be a trigger message, and the second message can carry information such as the name of the authentication method supported by the PIN element and the PIN element identifier.

The first message carries at least one of the following information:
the PIN element authentication indicator, the name of the authentication method supported by the PIN element, the subscription concealed identifier SUCI of the PIN element gateway or the 5G global unique temporary identifier 5G-GUTI, and the PIN element identifier. Here, in order to ensure the security of message transmission between network functions, the first message can be encapsulated as a Non-Access-Stratum (NAS) message and then sent to the first network function. Those skilled in the art should understand that the use of NAS messages is only for security considerations, and other types of messages can also be used to transmit the above information.

The first network function may include an access and mobility management function AMF. Those skilled in the art should understand that when other network function of the core network implements the function of AMF, it can also be enabled as the first network function. Or, when other network function of the core network is configured with the corresponding function of the first network function of the embodiment of the present disclosure, it can also be enabled as the first network function.

FIG. 3 is a flow chart of a method for selecting an authentication mechanism for a personal Internet of Things device according to an embodiment. As shown in FIG. 3, the method for selecting an authentication mechanism for a personal Internet of Things device in the embodiment of the present disclosure is applied to a second network function, and the second network function may include a unified data management function (UDM) or an address resolution protocol function (ARPF). Those skilled in the art should understand that when other network function of the core network is configured with the corresponding function of the second network function of the embodiment of the present disclosure, it can also be enabled as the second network function. The method for selecting an authentication mechanism for a personal Internet of Things device includes the following processing steps:

Step 301, authorizing the authentication request for the PIN element gateway.

In the embodiment of the present disclosure, authorizing the authentication request for the PIN element gateway includes that the second network function needs to judge whether the PEGC is a legitimate gateway and whether it is a gateway of the PIN element (PINE) according to the SUCI or SUPI of the PIN element gateway (PIN element with gateway capability), the PIN element identifier, and the subscription information of the corresponding PIN element gateway. The second network function also needs to select a corresponding authentication method for PINE. If the identification information of the PIN element gateway is SUCI, the SUCI is converted into SUPI, and then the authentication request of the PIN element gateway is authorized.

In the embodiment of the present disclosure, the authentication request carries at least one of the following information:

the PIN element authentication indicator, the PIN element identifier, the identification information of the PIN element gateway, the name of the authentication method supported by the PIN element, and the serving network identifier. The serving network identifier includes but is not limited to the serving network name, etc.

Step 302, selecting an authentication method for the PIN element authentication.

In the embodiment of the present disclosure, the second network function selects an authentication method for the PIN element based on the PIN element identifier sent by the PIN element and the name of the authentication method supported by the PIN element.

In the embodiment of the present disclosure, the PIN element identifier is protected information or unprotected information. The protection method of the PIN element identifier includes at least one of the following: encryption or anonymization. The encryption algorithm here can be MD5 algorithm, SHA1 algorithm, HMAC algorithm, AES/DES algorithm, etc. In the case where the PIN element identifier is protected information, it is necessary to deprotect the PIN element identifier and then authorize the authentication request of the PIN element gateway.

In the embodiment of the present disclosure, the second network function can identify the PIN element authentication indicator.

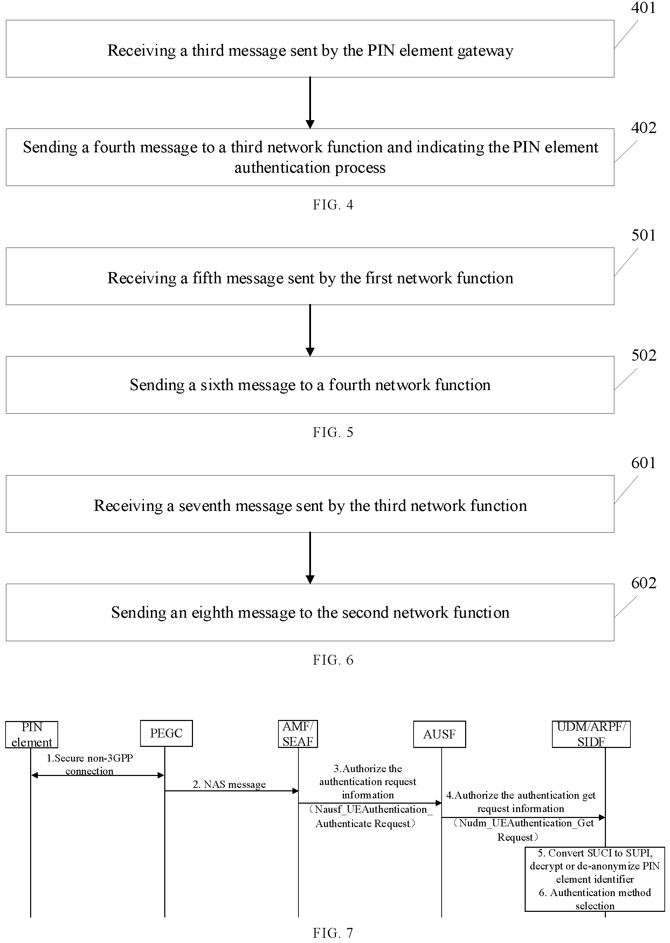

FIG. 4 is a flow chart of a method for selecting an authentication mechanism for a personal Internet of Things device according to an embodiment. As shown in FIG. 4, the method for selecting an authentication mechanism for a personal Internet of Things device in the embodiment of the present disclosure is applied to the first network function, and the method for selecting an authentication mechanism for a personal Internet of Things device includes the following processing steps:
Step 401, receiving a third message sent by the PIN element gateway.

The third message carries at least one of the following information:
the PIN element authentication indicator, the name of authentication method supported by PIN element, the subscription concealed identifier SUCI of PIN element gateway, 5G global unique temporary identifier 5G-GUTI, and PIN element identifier.

In the embodiment of the present disclosure, the third message herein may be a NAS message. Those skilled in the art should understand that the use of NAS message is only for security considerations, and other types of messages can also be used to realize the transmission of the above information.

The first network function may include access and mobility management function AMF. Those skilled in the art should understand that when other network function of the core network realize the function of AMF, it can also be enabled as the first network function. Or, when other network function of the core network is configured with the corresponding function of the first network function of the embodiment of the present disclosure, it can also be enabled as the first network function.

As an implementation method, the first network function receives the third message sent by the PIN element gateway. The third message can be sent by the PIN element to the first network function through PEGC. Those skilled in the art should understand that when related information is transmitted between different network functions, corresponding message encapsulation needs to be performed according to different network interfaces. The specific message format is not limited here, as long as the information can be transmitted.

As an example, the first network function may include an access and mobility management function AMF. Those skilled in the art should understand that when other network function of the core network implements the function of AMF, it can also be enabled as the first network function. Alternatively, when other network function of the core network is configured with the corresponding function of the first network function of the embodiment of the present disclosure, it can also be enabled as the first network function.

Step 402, sending a fourth message to a third network function and indicating the PIN element authentication process.

In the embodiment of the present disclosure, the third network function may include a security anchor function (SEAF). Those skilled in the art should understand that when other network function of the core network implements the function of SEAF, it can also be enabled as the third network function. Alternatively, when other network function of the core network is configured with the corresponding function of the third network function of the embodiment of the present disclosure, it can also be enabled as the third network function.

After receiving the fourth message, the AUSF checks whether the requesting AMF in the serving network is authorized to use the serving network name in the fourth message by comparing the serving network name with the expected serving network name. If the serving network is not authorized to use the serving network name, the AUSF sends a rejection message to the AMF. If the serving network is authorized the use of the serving network name, the AUSF sends a corresponding request message to the UDM.

In the embodiment of the present disclosure, the fourth message carries at least one of the following information:
the PIN element authentication indicator, the PIN element identifier, the identification information of the PIN element gateway, the name of the authentication method supported by the PIN element, and the serving network identifier. Here, the basic function of the PIN element authentication indicator is to indicate that the purpose of this message is to authenticate the PINE.

As an implementation method, the fourth message is a message that supports the communication protocol between AMF and SEAF, and can realize information transmission between AMF and SEAF.

In the embodiment of the present disclosure, the first network function can identify the PIN element authentication indicator.

FIG. 5 is a flow chart of a method for selecting an authentication mechanism for a personal Internet of Things device according to an embodiment. As shown in FIG. 5, the method for selecting an authentication mechanism for a personal Internet of Things device in the embodiment of the present disclosure is applied to a third network function. In the embodiment of the present disclosure, the third network function may include a security anchor function (SEAF). Those skilled in the art should understand that when other network function of the core network implements the function of SEAF, it can also be enabled as the third network function. Alternatively, when other network function of the core network is configured with the corresponding function of the third network function of the embodiment of the present disclosure, it can also be enabled as the third network function. The method for selecting an authentication mechanism for a personal IoT device includes the following processing steps:
Step 501, receiving a fifth message sent by the first network function.

The fifth message carries at least one of the following information:

the PIN element authentication indicator, the PIN element identifier, the identification information of the PIN element gateway, the name of the authentication method supported by the PIN element, and the serving network identifier.

In this embodiment, the first network function may include an access and mobility management function AMF. Those skilled in the art should understand that when other network function of the core network implements the function of AMF, it can also be enabled as the first network function. Alternatively, when other network function of the core network is configured with the corresponding function of the first network function of the embodiment of the present disclosure, it can also be enabled as the first network function.

In the embodiment of the present disclosure, the fifth message is a message that supports the communication protocol between AMF and SEAF, and can realize information transmission between AMF and SEAF.

Step 502, sending a sixth message to a fourth network function.

The sixth message carries at least one of the following information:
the PIN element authentication indicator, the PIN element identifier, the identification information of PIN element gateway, the name of authentication method supported by PIN element, and serving network identifier.

In the embodiment of the present disclosure, the fourth network function may include AUSF. Those skilled in the art should understand that when other network function of the core network implements the function of AUSF, it can also be enabled as the fourth network function. Or, when other network function of the core network is configured with the corresponding function of the fourth network function of the embodiment of the present disclosure, it can also be enabled as the fourth network function.

In the embodiment of the present disclosure, the sixth message is a message that supports the communication protocol between the authentication service function (AUSF) and SEAF, and can realize information transmission between AUSF and SEAF.

In the embodiment of the present disclosure, the third network function can identify the PIN element authentication indicator. In the embodiment of the present disclosure, the third network function may include a security anchor function (SEAF). Those skilled in the art should understand that when other network function of the core network implements the function of SEAF, it can also be enabled as the third network function. Alternatively, when other network function of the core network is configured with the corresponding function of the third network function of the embodiment of the present disclosure, it can also be enabled as the third network function.

FIG. 6 is a flow chart of a method for selecting an authentication mechanism for a personal Internet of Things device according to an embodiment. As shown in FIG. 6, the method for selecting an authentication mechanism for a personal Internet of Things device in the embodiment of the present disclosure is applied to the fourth network function. In the embodiment of the present disclosure, the fourth network function may include AUSF. It should be understood by those skilled in the art that when other network function of the core network implements the function of AUSF, it can also be enabled as the fourth network function. Alternatively, when other network function of the core network is configured with the corresponding function of the fourth network function of the embodiment of the present disclosure, it can also be enabled as the fourth network function. The method for selecting an authentication mechanism for a personal Internet of Things device includes the following processing steps:
Step 601, receiving a seventh message sent by the third network function.

The seventh message carries at least one of the following information:
the PIN element authentication indicator, the PIN element identifier, the identification information of the PIN element gateway, the name of the authentication method supported by the PIN element, and serving network identifier. In the embodiment of the present disclosure, the third network function may include a security anchor function (SEAF). Those skilled in the art should understand that when other network function of the core network implements the function of SEAF, it can also be enabled as the third network function. Alternatively, when other network function of the core network is configured with the corresponding function of the third network function of the embodiment of the present disclosure, it can also be enabled as the third network function.

In the embodiment of the present disclosure, the seventh message is a message that supports the communication protocol between AUSF and SEAF, and can realize information transmission between AUSF and SEAF.

Step 602, sending an eighth message to the second network function.

The eighth message carries at least one of the following information:
the PIN element authentication indicator, the PIN element identifier, the identification information of the PIN element gateway, the name of the authentication method supported by the PIN element, and the serving network identifier.

In the embodiment of the present disclosure, the seventh message is a message that supports the communication protocol between AUSF and UDM/ARPF, and can realize information transmission between AUSF and UDM/ARPF.

In the embodiment of the present disclosure, the fourth network function can identify the PIN element authentication indicator. The second network function may include a unified data management function (UDM) or an address resolution protocol function (ARPF). Those skilled in the art should understand that when other network function of the core network is configured with the corresponding function of the second network function of the embodiment of the present disclosure, it can also be enabled as the second network function.

The essence of the technical solution of the embodiment of the present disclosure is further explained below through specific examples.

At present, with the continuous development of Internet of Things technology and devices, some types of Internet of Things devices can be placed around the human body, such as in wearable devices such as cameras, headphones, watches, headphones, health monitors, etc., or they can be scattered at home, such as in smart lights, cameras, thermostats, door sensors, voice assistants, speakers, refrigerators, washing machines, lawn mowers, robots, etc., or in the offices of small businesses such as printers, meters, and sensors. Some Internet of Things devices have very specific requirements in terms of size, such as when they are set in earplugs, and some Internet of Things devices have very specific requirements in terms of weight, such as when they are set in wearable devices such as glasses. In addition, some IoT devices have very specific requirements in many aspects such as size, weight and power consumption. With the rapid increase in the number of IoT devices, users need to use these IoT devices to create corresponding networks to achieve management and access to IoT devices.

The user created network is composed by devices forming the Personal IoT Network (PIN). There are three types of devices in the PIN: device with gateway capability (PIN Element with Gateway Capability, PEGC), device with management capability (PIN Element with Management Capability, PEMC), and device without gateway and management capabilities. The PEGC and PEMC also are UE that can access 5GS directly. The PEMC also is able to access the 5GS via the PEGC.

The embodiment of the present disclosure provides an identity authentication process initiated by 5GC for a PIN element and selects a corresponding identity authentication method for the PIN element.

In the embodiment of the disclosure, it is assumed that the PIN element identifier has been associated with the subscription information of PEGC. It is assumed that PEGC has been registered with 5GC. The connection between PEGC and AMF is protected by NAS security. AMF and SEAF are co-located. Of course, AMF and SEAF can also be set separately. An example is explained with reference to FIG. 7.

FIG. 7 is a flowchart of a method for selecting an authentication mechanism for a personal IoT device according to an embodiment. As shown in FIG. 7, the method for selecting an authentication mechanism for a personal IoT device according to an embodiment of the present disclosure includes the following processing steps:
Step 1, a secure non-3GPP connection is negotiated between the PIN element and the PEGC. The PIN element sends information such as a PIN element authentication indicator, a name of an authentication method supported by the PIN element, and a PIN element identifier to the PEGC.

Specifically, the PIN element sends its identifier to the PEGC. The PIN element can support identity authentication through a secure non-3GPP connection. How to establish a secure connection between the PIN element and the PEGC is beyond the scope of 3GPP.

Step 2, the PEGC sends a NAS message to the AMF. The NAS message carries information such as a PIN element authentication indicator, a PIN element identifier, a name of an authentication method supported by the PIN element, and a SUCI or 5G-GUTI of the PEGC.

Step 3, when the AMF wishes to initiate identity authentication, the AMF calls the Nausf_UEAuthentication service by sending a Nausf_UEAuthentication_Authenticate Request message to the AUSF. The Nausf_UEAuthentication_Authenticate Request message may contain information such as the PIN element authentication indicator, the PIN element identifier, the name of the authentication method supported by the PIN element, the SUPI or SUCI of the PEGC, and the serving network identifier.

Step 4, after receiving the Nausf_UEAuthentication_Authenticate Request message, the AUSF checks whether the requesting AMF in the serving network is authorized to use the serving network name in the Nausf_UEAuthentication_Authenticate request by comparing the serving network name with the expected serving network name. The AUSF will temporarily store the received serving network name. If the serving network is not authorized to use the serving network name, the AUSF can respond to the AMF with "Serving network Not Authorized" in the Nausf_UEAuthentication_Authenticate response message. If the serving network is authorized to use the serving network name, the AUSF sends a Nudm_UEAuthentication_Get Request message to the UDM. The Nudm_UEAuthentication_Get Request message sent to the UDM may include a PIN element authentication indicator, a PIN element identifier, a PEGC SUPI or SUCI, an authentication method name supported by the PIN element, and a serving network identifier.

Step 5: After receiving the Nudm_UEAuthentication_Get Request message, if the UDM receives the PEGC SUCI, the UDM will call the Subscription Identifier De-concealing Function (SIDF) to decrypt the PEGC SUCI into the PEGC SUPI. If the PIN element identifier received by the UDM is protected information such as information processed by encryption or anonymization, the UDM will call the Subscription Identifier De-concealing Function (SIDF), that is, decrypt or de-anonymize the protected PIN element identifier, etc. After deprotecting the PIN element identifier, the authentication request of the PIN element gateway is authorized. Here, the MD5 algorithm, SHA1 algorithm, HMAC algorithm, AES/DES algorithm, etc. can be used to protect the PIN element identifier. When DM determines that SUCI of PEGC is received, SUCI of PEGC is converted into SUPI, and then the corresponding authentication method is selected for the PIN element.

Step 6, UDM/ARPF allows PEGC to perform the authentication process of the PIN element according to the SUPI of PEGC and PIN element identifier and the subscription authentication of PEGC, and then selects the authentication method for the authentication of the PIN element based on the PIN element identifier sent by the PIN element and the name of the authentication method supported by the PIN element.

The embodiment of the present disclosure realizes the identity authentication of the PIN element by the 5G core network, and improves the communication security of the PIN.

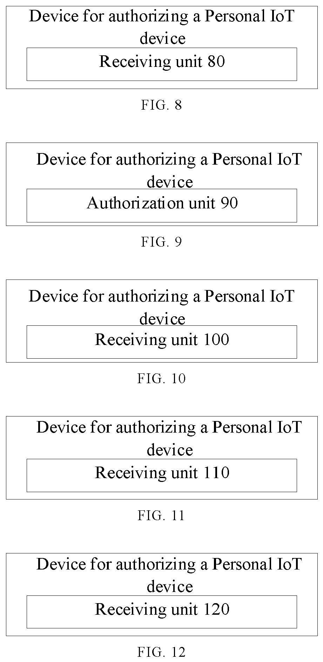

FIG. 8 is a schematic diagram of the composition structure of a device for selecting an authentication mechanism for a personal Internet of Things device according to an embodiment. As shown in FIG. 8, the device for selecting an authentication mechanism for a personal Internet of Things device according to an embodiment of the present disclosure can be applied to a UE, and the device includes:
a receiving unit 80, configured to receive at least one of the following information sent by a personal Internet of Things PIN element: the name of the authentication method supported by the PIN element, the PIN element identifier, and the PIN element authentication indicator.

Based on the device for selecting an authentication mechanism for a personal Internet of Things device shown in FIG. 8, the device further includes:
a sending unit (not shown in FIG. 8), configured to send a first message to a first network function to indicate the PIN element authentication process to the first network function;
where the first message carries at least one of the following information:
   a PIN element authentication indicator, a name of the authentication method supported by the PIN element, a subscription concealed identifier SUCI or a 5G global unique temporary identifier 5G-GUTI of the PIN element gateway, and a PIN element identifier. Here, the sending unit sends the first message to the first network function in response to the receiving unit 80 receiving the third message of the PIN element. In order to ensure the security of message transmission between network functions, the first message can be encapsulated as a non-access stratum (NAS) message and then sent to the first network function.

The UE of the embodiment of the present disclosure can be enabled as a PEGC.

In an embodiment, the receiving unit 80, the sending unit, etc. can be implemented by one or more central processing units (CPUs), graphics processing units (GPUs), baseband processors (BPs), application-specific integrated circuits (ASICs), digital signal processors (DSPs), programmable logic devices (PLDs), complex programmable logic devices (CPLDs), field programmable gate arrays (FPGAs), general-purpose processors, controllers, microcontrollers (MCUs), microprocessors, or other electronic components, and can also be implemented in combination with one or more radio frequency (RF) antennas to perform the steps of the method for selecting an authentication mechanism for a personal IoT device in the aforementioned embodiment.

In the embodiment of the present disclosure, the specific manner in which each unit in the device shown in FIG. 8 performs operations has been described in detail in the embodiment of the method, and will not be repeated here.

FIG. 9 is a schematic diagram of the composition structure of a device for selecting an authentication mechanism for a personal Internet of Things device according to an embodiment. As shown in FIG. 9, the device for selecting an authentication mechanism for a personal Internet of Things device in the embodiment of the present disclosure can be applied to a second network function such as UDM/ARPF, and the device includes:
an authorization unit 90, configured to authorize the authentication request of the PIN element gateway; where the PIN element gateway allows to perform an authentication process for the PIN element based on the identification information of the PIN element gateway and the PIN element identifier.

The authentication request carries at least one of the following information:
a PIN element authentication indicator, a PIN element identifier, identification information of the PIN element gateway, a name of the authentication method supported by the PIN element, and a serving network identifier.

Based on the device for selecting an authentication mechanism for a personal Internet of Things device shown in FIG. 9, the device further includes:
a selection unit (not shown in FIG. 9), configured to select an authentication method supported by the PIN element for the PIN element.

The selection unit is further configured to:
select an authentication method for the PIN element based on the PIN element identifier sent by the PIN element and the name of the authentication method supported by the PIN element.

Here, the second network function is capable of identifying the PIN element authentication indicator.

In an embodiment, the authorization unit 90, the selection unit, etc. can be implemented by one or more central processing units (CPUs), graphics processing units (GPUs), baseband processors (BPs), application-specific integrated circuits (ASICs), digital signal processors (DSPs), programmable logic devices (PLDs), complex programmable logic devices (CPLDs), field programmable gate arrays (FPGAs), general-purpose processors, controllers, microcontrollers (MCUs), microprocessors, or other electronic components, and can also be implemented in combination with one or more radio frequency (RF) antennas to perform the steps of the method for selecting an authentication mechanism for a personal IoT device in the aforementioned embodiment.

In the embodiment of the present disclosure, the specific manner in which each unit in the device shown in FIG. 9 performs operations has been described in detail in the embodiment of the method, and will not be repeated in detail here.

FIG. 10 is a schematic diagram of the composition structure of a device for selecting an authentication mechanism for a personal IoT device according to an embodiment. As shown in FIG. 10, the device for selecting an authentication mechanism for a personal IoT device in the embodiment of the present disclosure can be applied to the first network function such as AMF, and the device includes:
a receiving unit 100 configured to receive a third message sent by a PIN element gateway;
where the third message carries at least one of the following information:
   a PIN element authentication indicator, a name of the authentication method supported by the PIN element, a subscription hidden identifier SUCI of the PIN element gateway, a 5G global unique temporary identifier 5G-GUTI, and a PIN element identifier.

Based on the device for selecting an authentication mechanism for a personal IoT device shown in FIG. 10, the device further includes:
a sending unit (not shown in FIG10) configured to send a fourth message to a third network function to indicate a PIN element authentication process;
where the fourth message carries at least one of the following information:
   a PIN element authentication indicator, a PIN element identifier, identification information of a PIN element gateway, a name of an authentication method supported by the PIN element, and a serving network identifier.

Here, the first network function is capable of identifying the PIN element authentication indicator.

In an embodiment, the receiving unit 100, the sending unit, etc. can be implemented by one or more central processing units (CPU), graphics processing units (GPU), baseband processors (BP), application-specific integrated circuits (ASIC), digital signal processors (DSP), programmable logic devices (PLD), complex programmable logic devices (CPLD), field-programmable gate arrays (FPGA), general-purpose processors, controllers, microcontrollers (MCU), microprocessors, or other electronic components, and can also be implemented in combination with one or more radio frequency (RF) antennas to perform the steps of the method for selecting an authentication mechanism for a personal IoT device in the aforementioned embodiment.

In the embodiment of the present disclosure, the specific manner in which each unit in the device shown in FIG. 10 performs operations has been described in detail in the embodiment of the method, and will not be repeated here.

FIG. 11 is a schematic diagram of the composition structure of a device for selecting an authentication mechanism for a personal Internet of Things device according to an embodiment. As shown in FIG. 11, the device for selecting an authentication mechanism for a personal Internet of Things device according to the embodiment of the present disclosure can be applied to a third network function such as SEAF, and the device includes:
a receiving unit 110, configured to receive a fifth message sent by a first network function;
where the fifth message carries at least one of the following information:
   a PIN element authentication indicator, a PIN element identifier, identification information of a PIN element gateway, a name of an authentication method supported by the PIN element, and a serving network identifier.

Based on the device for selecting an authentication mechanism for a personal Internet of Things device shown in FIG. 11, the device further includes:
a sending unit (not shown in FIG. 11), configured to send a sixth message to a fourth network function;
where the sixth message carries at least one of the following information:
   a PIN element authentication indicator, a PIN element identifier, identification information of a PIN element gateway, a name of an authentication method supported by the PIN element, and a serving network identifier.

Here, the third network function can identify the PIN element authentication indicator.

In an embodiment, the receiving unit 110, the sending unit, etc. can be implemented by one or more central processing units (CPU), graphics processing units (GPU), baseband processors (BP), application-specific integrated circuits (ASIC), digital signal processors (DSP), programmable logic devices (PLD), complex programmable logic devices (CPLD), field-programmable gate arrays (FPGA), general-purpose processors, controllers, microcontrollers (MCU), microprocessors, or other electronic components, and can also be implemented in combination with one or more radio frequency (RF) antennas to perform the steps of the method for selecting an authentication mechanism for a personal IoT device in the aforementioned embodiment.

In the embodiment of the present disclosure, the specific manner in which each unit in the device shown in FIG. 11 performs operations has been described in detail in the embodiment of the method, and will not be repeated here.

FIG. 12 is a schematic diagram of the composition structure of a device for selecting an authentication mechanism for a personal Internet of Things device according to an embodiment. As shown in FIG. 12, the device for selecting an authentication mechanism for a personal Internet of Things device according to the embodiment of the present disclosure can be applied to a fourth network function such as AUSF, and the device includes:
a receiving unit 120, configured to receive a seventh message sent by a third network function;
where the seventh message carries at least one of the following information:
   a PIN element authentication indicator, a PIN element identifier, identification information of a PIN element gateway, a name of an authentication method supported by the PIN element, and a serving network identifier.

Based on the device for selecting an authentication mechanism for a personal Internet of Things device shown in FIG. 12, the device further includes:
a sending unit (not shown in FIG12), configured to send an eighth message to a second network function;
where the eighth message carries at least one of the following information:
   a PIN element authentication indicator, a PIN element identifier, identification information of a PIN element gateway, a name of an authentication method supported by the PIN element, and a serving network identifier.

Here, the fourth network function can identify the PIN element authentication indicator.

In an embodiment, the receiving unit 120, the sending unit, etc. can be implemented by one or more central processing units (CPUs), graphics processing units (GPUs), baseband processors (BPs), application-specific integrated circuits (ASICs), digital signal processors (DSPs), programmable logic devices (PLDs), complex programmable logic devices (CPLDs), field-programmable gate arrays (FPGAs), general-purpose processors, controllers, microcontrollers (MCUs), microprocessors, or other electronic components, and can also be implemented in combination with one or more radio frequency (RF) antennas to perform the steps of the method for selecting an authentication mechanism for a personal IoT device in the aforementioned embodiment.

In the embodiment of the present disclosure, the specific manner in which each unit in the device shown in FIG. 12 performs operations has been described in detail in the embodiment of the method, and will not be repeated here.

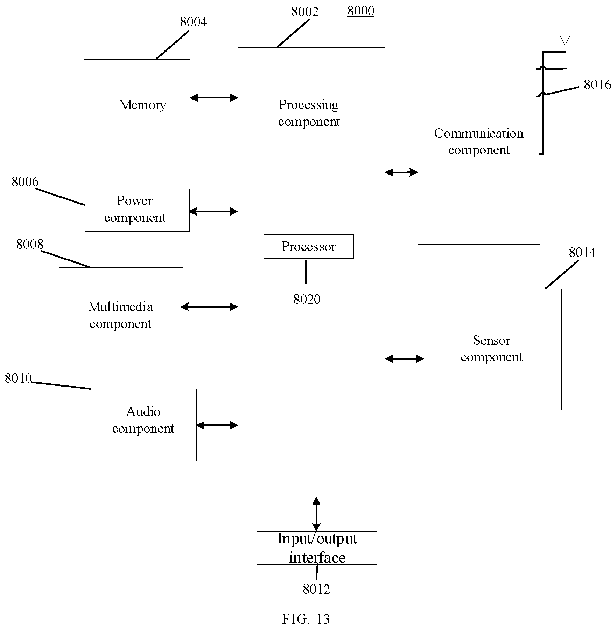

FIG. 13 is a block diagram of a user equipment 8000 shown according to an embodiment. For example, the user equipment 8000 may be a mobile phone, a computer, a digital broadcast terminal, a messaging device, a game console, a tablet device, a medical device, a fitness device, a personal digital assistant, etc.

Referring to FIG. 13, the user equipment 8000 may include one or more of the following components: a processing component 8002, a memory 8004, a power component 8006, a multimedia component 8008, an audio component 8010, an input/output (I/O) interface 8012, a sensor element 8014, and a communication component 8016.

The processing component 8002 generally controls the overall operation of the user device 8000, such as operations associated with display, phone calls, data communications, camera operations, and recording operations. The processing component 8002 may include one or more processors 8020 to execute instructions to complete all or part of the steps of the above-mentioned method for selecting an authentication mechanism for a personal IoT device. In addition, the processing component 8002 may include one or more modules to facilitate the interaction between the processing component 8002 and other components. For example, the processing component 8002 may include a multimedia module to facilitate interaction between the multimedia component 8008 and the processing component 8002.

The memory 8004 is configured to store various types of data to support operations on the device 8000. Examples of such data include instructions for any application or method operating on the user equipment 8000, contact data, phone book data, messages, pictures, videos, etc. The memory 8004 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 8006 provides power to various components of the user equipment 8000. The power component 8006 may include a power management system, one or more power supplies, and other components associated with generating, managing, and distributing power to the user equipment 8000.

The multimedia component 8008 includes a screen that provides an output interface between the user equipment 8000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundary of the touch or slide action, but also detect the duration and pressure associated with the touch or slide operation. In some embodiments, the multimedia component 8008 includes a front camera and/or a rear camera. When the device 8000 is in an operating mode, such as a shooting mode or a video mode, the front camera and/or the rear camera may receive external multimedia data. Each front camera and rear camera may be a fixed optical lens system or have focal length and optical zoom capabilities.

The audio component 8010 is configured to output and/or input audio signals. For example, the audio component 8010 includes a microphone (MIC), which is configured to receive external audio signals when the user equipment 8000 is in an operating mode, such as a call mode, a recording mode, and a voice recognition mode. The received audio signal can be further stored in the memory 8004 or sent via the communication component 8016. In some embodiments, the audio component 8010 further includes a speaker for outputting audio signals.

The I/O interface 8012 provides an interface between the processing component 8002 and the peripheral interface module. The peripheral interface module can be a keyboard, a click wheel, a button, etc. These buttons may include but are not limited to: a home button, a volume button, a start button, and a lock button.

The sensor component 8014 includes one or more sensors for providing various aspects of status assessment for the user equipment 8000. For example, the sensor component 8014 can detect the open/closed state of the UE equipment 8000, the relative positioning of the components, such as the display and keypad of the user equipment 8000. The sensor component 8014 can also detect the position change of the user equipment 8000 or a component in the user equipment 8000, the presence or absence of contact between the user and the user equipment 8000, the orientation or acceleration/deceleration of the user equipment 8000 and the temperature change of the user equipment 8000. The sensor component 8014 may include a proximity sensor configured to detect the presence of nearby objects without any physical contact. The sensor component 8014 may also include a light sensor, such as a CMOS or CCD image sensor, for use in imaging applications. In some embodiments, the sensor component 8014 may also include an acceleration sensor, a gyroscope sensor, a magnetic sensor, a pressure sensor, or a temperature sensor.

The communication component 8016 is configured to facilitate wired or wireless communication between the user equipment 8000 and other devices. The user equipment 8000 can access a wireless network based on a communication standard, such as Wi-Fi, 2G or 3G, or a combination thereof. In an embodiment, the communication component 8016 receives a broadcast signal or broadcast-related information from an external broadcast management system via a broadcast channel. In an embodiment, the communication component 8016 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the user equipment 8000 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the steps of the above-mentioned method for selecting an authentication mechanism for a personal IoT device.

In an embodiment, a non-temporary computer-readable storage medium including instructions is also provided, such as a memory 8004 including instructions, and the above instructions can be executed by the processor 8020 of the user equipment 8000 to complete the steps of the method for selecting an authentication mechanism for a personal Internet of Things device. For example, the non-temporary computer-readable storage medium can be a ROM, a random access memory (RAM), a CD-ROM, a tape, a floppy disk, and an optical data storage device, etc.

The embodiment of the present disclosure also records a first network function, including a processor, a transceiver, a memory, and an executable program stored on the memory and capable of being run by the processor, and the processor executes the steps of the method for selecting an authentication mechanism for a personal Internet of Things device in the above embodiment when running the executable program.

The embodiment of the present disclosure also records a second network function, including a processor, a transceiver, a memory, and an executable program stored on the memory and capable of being run by the processor, and the processor executes the steps of the method for selecting an authentication mechanism for a personal Internet of Things device in the above embodiment when running the executable program.

The embodiment of the present disclosure also records a third network function, including a processor, a transceiver, a memory, and an executable program stored on the memory and capable of being run by the processor, and the processor executes the steps of the method for selecting an authentication mechanism for a personal Internet of Things device in the aforementioned embodiment when running the executable program.

The embodiment of the present disclosure also records a fourth network function, including a processor, a transceiver, a memory, and an executable program stored on the memory and capable of being run by the processor, and the processor executes the steps of the method for selecting an authentication mechanism for a personal Internet of Things device in the aforementioned embodiment when running the executable program.

The embodiment of the present disclosure also records a user equipment, including a processor, a transceiver, a memory, and an executable program stored on the memory and capable of being run by the processor, and the processor executes the steps of the method for selecting an authentication mechanism for a personal Internet of Things device in the aforementioned embodiment when running the executable program.

The embodiment of the present disclosure also records a storage medium on which an executable program is stored, and the executable program is executed by the processor to execute the steps of the method for selecting an authentication mechanism for a personal Internet of Things device in the aforementioned embodiment.

After considering the specification and practicing the present disclosure, those skilled in the art will easily think of other implementations of the embodiments of the present disclosure. This application is intended to cover any variation, use or adaptation of the embodiments of the present disclosure, which follows the general principles of the embodiments of the present disclosure and includes common knowledge or customary technical means in the technical field that are not disclosed in the embodiments of the present disclosure. The description and embodiments are to be regarded as examples only, and the true scope and spirit of the embodiments of the present disclosure are indicated by the following claims.

It should be understood that the embodiments of the present disclosure are not limited to the precise structure described above and shown in the drawings, and various modifications and changes can be made without departing from the scope thereof. The scope of the embodiments of the present disclosure is limited only by the appended claims.

## Claims

1. A method for selecting an authentication mechanism for a personal Internet of Things device, applied to a user equipment UE, the method comprising:
receiving at least one of the following information sent by a personal Internet of Things network PIN element: a name of an authentication method supported by the PIN element, a PIN element identifier, and a PIN element authentication indicator.

2. The method according to claim 1, further comprising:
sending a first message to a first network function and indicating a PIN element authentication process to the first network function; wherein the first message carries at least one of the following information:
the PIN element authentication indicator, the name of the authentication method supported by the PIN element, a subscription concealed identifier SUCI or a 5G global unique temporary identifier 5G-GUTI of a PIN element gateway, and the PIN element identifier.

3. The method according to claim 2, wherein sending the first message to the first network function comprises:
sending the first message to the first network function in response to receiving a second message of the PIN element.

4. The method according to claim 2, wherein sending the first message to the first network function comprises:
encapsulating the first message into a non-access stratum NAS message and sending the NAS message to the first network function.

5. The method according to any one of claims 1 to 4, wherein the UE is enabled as a PIN element gateway.

6. A method for selecting an authentication mechanism for a personal Internet of Things device, applied to a second network function, the method comprising:
authorizing an authentication request for a PIN element gateway and selecting an authentication method for PIN element authentication.

7. The method according to claim 6, wherein the authentication request carries at least one of the following information:
a PIN element authentication indicator, a PIN element identifier, identification information of the PIN element gateway, a name of an authentication method supported by a PIN element, and a serving network identifier.

8. The method according to claim 7, wherein the PIN element identifier is protected information or unprotected information; wherein a protection method of the PIN element identifier comprises at least one of the following: encryption, or anonymization;
authorizing the authentication request for the PIN element gateway comprises:
in a case that the PIN element identifier is protected information, authorizing the authentication request for the PIN element gateway after deprotecting the PIN element identifier.

9. The method according to claim 7, wherein authorizing the authentication request for the PIN element gateway comprises:
determining that the PIN element gateway is a legitimate gateway and is a gateway of the PIN element according to the PIN element identifier, subscription information of the PIN element gateway and a subscription concealed identifier SUCI and/or a subscription permanent identifier SUPI of the PIN element gateway.

10. The method according to claim 9, wherein authorizing the authentication request for the PIN element gateway comprises:
if the identification information of the PIN element gateway is the SUCI, converting the SUCI into the SUPI, and then authorizing the authentication request for the PIN element gateway.

11. The method according to any one of claims 6 to 10, further comprising:
selecting the authentication method supported by the PIN element for the PIN element.

12. The method according to claim 11, wherein selecting the authentication method supported by the PIN element for the PIN element comprises:
selecting the authentication method for the PIN element based on the PIN element identifier and the name of the authentication method supported by the PIN element, wherein the PIN element identifier and the name of the authentication method supported by the PIN element are sent by the PIN element.

13. A method for selecting an authentication mechanism for a personal Internet of Things device, applied to a first network function, the method comprising:
receiving a third message sent by a PIN element gateway;
wherein the third message carries at least one of the following information:
a PIN element authentication indicator, a name of an authentication method supported by a PIN element, a subscription concealed identifier SUCI of the PIN element gateway, a 5G global unique temporary identifier 5G-GUTI, and a PIN element identifier.

14. The method according to claim 13, further comprising:
sending a fourth message to a third network function and indicating a PIN element authentication process;
wherein the fourth message carries at least one of the following information:
the PIN element authentication indicator, the PIN element identifier, identification information of the PIN element gateway, the name of the authentication method supported by the PIN element, and a serving network identifier.

15. A method for selecting an authentication mechanism for a personal Internet of Things device, applied to a third network function, the method comprising:
receiving a fifth message sent by a first network function;
wherein the fifth message carries at least one of the following information:
a PIN element authentication indicator, a PIN element identifier, identification information of a PIN element gateway, an authentication method, and a serving network identifier.

16. The method according to claim 15, further comprising:
sending a sixth message to a fourth network function;
wherein the sixth message carries at least one of the following information:
the PIN element authentication indicator, the PIN element identifier, the identification information of the PIN element gateway, a name of an authentication method supported by a PIN element, and the serving network identifier.

17. A method for selecting an authentication mechanism for a personal Internet of Things device, applied to a fourth network function, the method comprising:
receiving a seventh message sent by a third network function;
wherein the seventh message carries at least one of the following information:
a PIN element authentication indicator, a PIN element identifier, identification information of a PIN element gateway, a name of an authentication method supported by a PIN element, and a serving network identifier.

18. The method according to claim 17, further comprising:
sending an eighth message to a second network function;
wherein the eighth message carries at least one of the following information:
the PIN element authentication indicator, the PIN element identifier, the identification information of the PIN element gateway, the name of the authentication method supported by the PIN element, and the serving network identifier.

19. A device for selecting an authentication mechanism for a personal Internet of Things device, comprising:
a receiving unit configured to receive at least one of the following information sent by a personal Internet of Things network PIN element: a name of an authentication method supported by a PIN element, a PIN element identifier, and a PIN element authentication indicator.

20. A device for selecting an authentication mechanism for a personal Internet of Things device, comprising:
an authorization unit configured to authorize an authentication request for a PIN element gateway; wherein the PIN element gateway allows to perform an authorization process for a PIN element based on identification information of a PIN element gateway and a PIN element identifier.

21. A device for selecting an authentication mechanism for a personal Internet of Things device, comprising:
a receiving unit configured to receive a third message sent by a PIN element gateway;
wherein the third message carries at least one of the following information:
a PIN element authentication indicator, a name of an authentication method supported by a PIN element, a subscription concealed identifier SUCI of a PIN element gateway, a 5G global unique temporary identifier 5G-GUTI, and a PIN element identifier.

22. A device for selecting an authentication mechanism for a personal Internet of Things device, comprising:
a receiving unit configured to receive a fifth message sent by a first network function;
wherein the fifth message carries at least one of the following information:
a PIN element authentication indicator, a PIN element identifier, identification information of a PIN element gateway, a name of an authentication method supported by a PIN element, and a serving network identifier.

23. A device for selecting an authentication mechanism for a personal Internet of Things device, comprising:
a receiving unit configured to receive a seventh message sent by a third network function;
wherein the seventh message carries at least one of the following information:
a PIN element authentication indicator, a PIN element identifier, identification information of a PIN element gateway, a name of an authentication method supported by a PIN element, and a serving network identifier.

24. A user equipment comprising a processor, a transceiver, a memory, and an executable program stored on the memory and capable of being run by the processor, wherein the processor executes the steps of the method for selecting an authentication mechanism for a personal Internet of Things device according to any one of claims 1 to 5 when the processor runs the executable program.

25. A network function comprising a processor, a transceiver, a memory, and an executable program stored on the memory and capable of being run by the processor, wherein the processor executes the steps of the method for selecting an authentication mechanism for a personal Internet of Things device according to any one of claims 6 to 12 or 13 to 14 or 15 to 16 or 17 to 18 when the processor runs the executable program.

26. A storage medium having an executable program stored thereon, wherein when the executable program is executed by a processor, the steps of the method for selecting an authentication mechanism for a personal Internet of Things device according to any one of claims 1 to 18 are implemented.
